# EUROPEAN PATENT APPLICATION

(11) **EP 1 816 761 A2**
(43) Date of publication of application: **08.08.2007**
(21) Application number: 07250464.0
(22) Date of filing: 05.02.2007
(51) Int. Cl.: H04B 10/00, F41H 13/00

(54) **Netted communication and weapons system for littoral warfare**

(30) Priority: 07.02.2006 US 348660
(71) Applicant: Raytheon Company, Waltham, Massachusetts 02451-1449 (US)
(72) Inventor: Lam, Juan F., Manhattan Beach, CA 90266-4142 (US)
(74) Representative: Jackson, Richard Eric

(57) **Abstract**

A system for projecting energy comprising a platform; an arrangement disposed on the platform for generating a laser beam; an unmanned aerial vehicle; and a relay disposed on the vehicle for redirecting the laser beam. In the illustrative embodiment, the platform is a submarine and the laser beam is provided by an onboard high energy laser. The system further includes a satellite based communication system for exchanging data with the aerial vehicle and the submarine. In the best mode, the device for relaying is a relay mirror. A mirror pointing control system, sensors and terminal homing and communication systems are included on the aerial vehicle.

## Description

### BACKGROUND OF THE INVENTION

### Field of the Invention:

The present invention relates to laser systems. More specifically, the present invention relates to the applications of high energy lasers and communications to weapons systems and methods.

### Description of the Related Art:

Naval assets face significant threats in modem littoral warfare. Small and fast moving boats and land mobile launchers, capable of launching nuclear-tipped cruise missiles, are very difficult to detect and track because of the nature of the littoral environment. With cruise missiles, fast boats can hide inside highly turbulent waves near the seashore while attacking a naval group located hundreds of miles away from shore. The rugged terrain encountered in the littoral environment can also camouflage land mobile cruise missile launchers. Cruise missiles are difficult to defend against due to clutter from the sea.

Present attempts to defend against these threats include the use tactical (e.g. Tomahawk) missiles launched from surface vessels and/or nuclear submarines. However, this approach is limited because tactical missiles fly slowly and its ability to change target location that is limited by the available overhead (ISR) assets, a shortcoming that is particularly problematic for the fast moving targets in the littoral theatre.

Hence, a need exists in the art for an improved system or method for defending naval assets in the littoral environment. Specifically, there is a need for a system or method for intercepting fast moving targets in a coastal area.

### SUMMARY OF THE INVENTION

The need in the art is addressed by the teachings of the present invention. In the illustrative embodiment, the invention provides a system for projecting energy comprising a platform; an arrangement disposed on the platform for generating a laser beam; an unmanned aerial vehicle; and a device disposed on the vehicle for relaying the laser beam.

In the illustrative embodiment, the platform is a submarine and the laser beam is provided by a high energy laser mounted on the submarine. The system further includes a satellite based communication system for exchanging data with the aerial vehicle and the submarine. In the best mode, the device for relaying is a relay mirror. A mirror pointing control system, sensors and terminal homing and communication systems are included on the aerial vehicle.

Hence, in the illustrative application, the invention provides a network centric architecture and mode of operation that leverages the capabilities of a laser weaponized nuclear submarine as a node in the network of ISR and communication assets and a hovering unmanned beam director system to address the problem of fast moving lethal targets in the littoral region. These targets can be neutralized in a covert manner inasmuch as the nuclear submarine can approach the area of interest using its underwater capabilities and launch a hard-to-detect hovering unmanned aerial vehicle that serves as a beam director for the high energy laser beam as well as the terminal target designator. In accordance with the invention, a network is used to detect and prosecute moving targets, the network including satellites, surface ships and detector arrays, submarines and airborne vehicles.

### BRIEF DESCRIPTION OF THE DRAWINGS

Figure 1 is a diagram that illustrates the present teachings in connection with an exemplary application.
Figure 2 is a simplified representation of an unmanned aerial vehicle implemented in accordance with the present teachings.
Figure 3 shows an optical layout in accordance with an illustrative implementation of the present invention.
Fig. 4 is a block diagram of an illustrative implementation of an electrical system adapted for use with the system for projecting directed energy of the present invention.
Fig. 5 is a diagram showing a submarine modified with an HEL and a UAV in accordance with the present teachings.

### DESCRIPTION OF THE INVENTION

Illustrative embodiments and exemplary applications will now be described with reference to the accompanying drawings to disclose the advantageous teachings of the present invention.

While the present invention is described herein with reference to illustrative embodiments for particular applications, it should be understood that the invention is not limited thereto. Those having ordinary skill in the art and access to the teachings provided herein will recognize additional modifications, applications, and embodiments within the scope thereof and additional fields in which the present invention would be of significant utility.

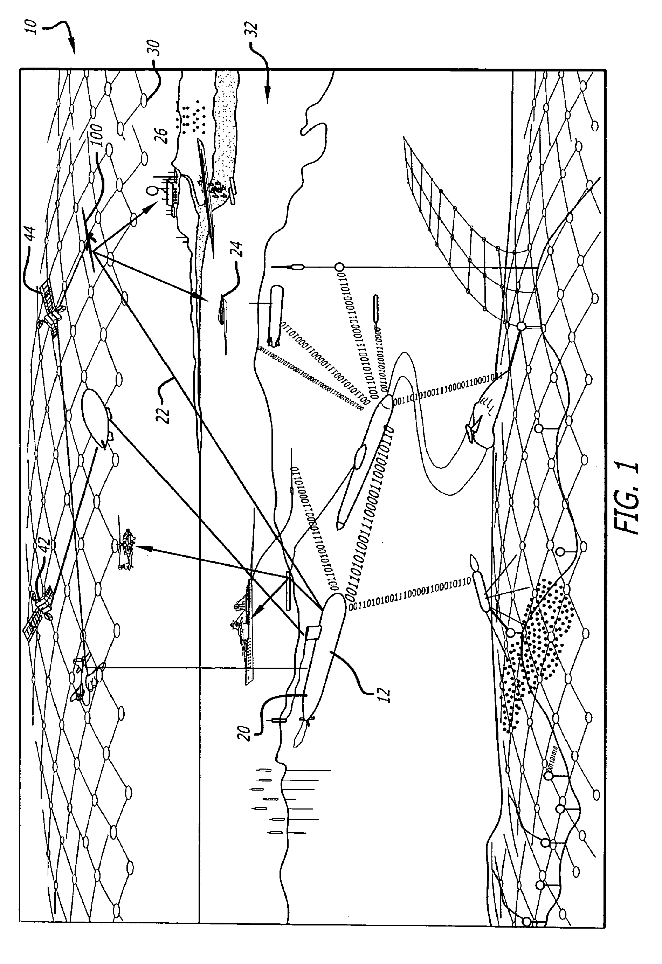

Figure 1 is a diagram that illustrates the present teachings in connection with an exemplary application. As shown in Figure 1, in the illustrative embodiment, the invention is a network centric solution 10 including a submarine 20, equipped with a high energy laser weapon such as a solid state laser (not shown), and a hovering unmanned aerial vehicle (UAV) 100. In accordance with the present teachings, the UAV 100 is equipped with a reflecting set of mirrors (not shown in Figure 1) and flies at a high altitude (e.g., over 20,000 feet.) The UAV 100 serves as a director for the high energy laser weapon on the submarine 20 (or a surface ship or land based vehicle or facility), as well as a terminal target acquisition subsystem and an intermediate node for the laser communication from the submarine to the transformation communication satellites.

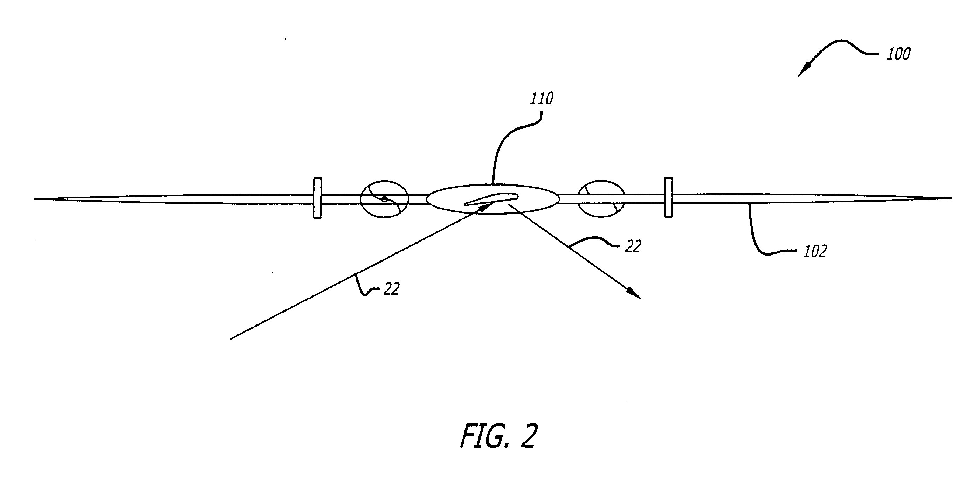

Figure 2 is a simplified representation of an unmanned aerial vehicle implemented in accordance with the present teachings. As discussed more fully below, the UAV 100 includes an airframe 102 within which a relay mirror 110 is disposed to receive a high energy beam from the submarine 22 and redirect the beam to a target 24 (Fig. 1). Also disposed within the airframe 102 are an arrangement for mirror control and actuation, communication, propulsion, sensing, guidance and terminal homing (not shown in Figure 2).

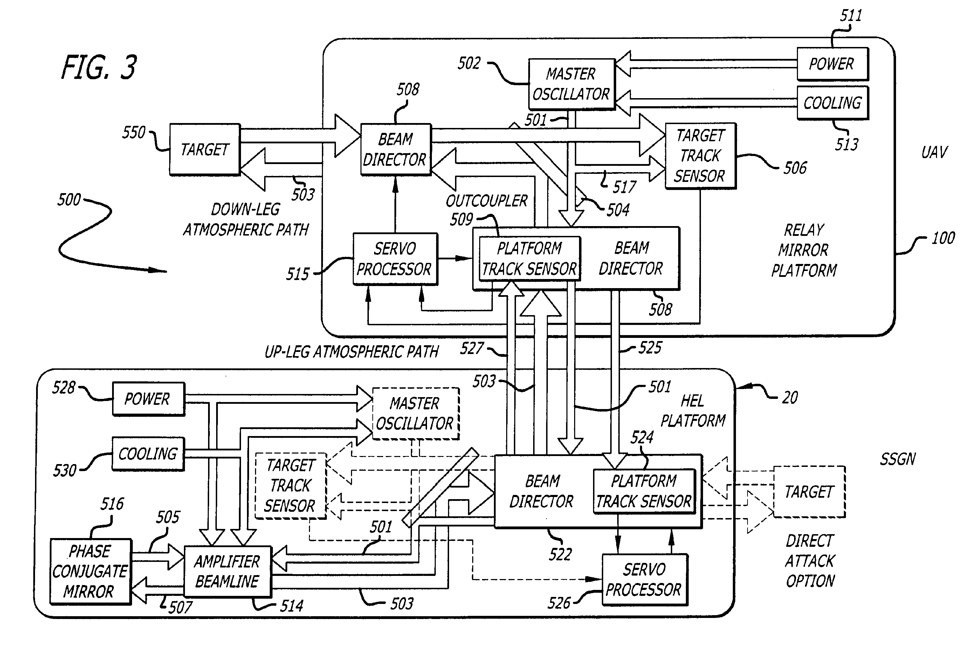

Figure 3 shows an optical layout of a high energy laser system in accordance with an illustrative implementation of the present invention. In the best mode, the laser system 500 system is a phase conjugate master oscillator power amplifier (PCMOPA) implemented in accordance with the teachings of U. S. Patent Application Serial No. 10/272,778, entitled PHASE CONJUGATE RELAY MIRROR APPARATUS FOR HIGH ENERGY LASER SYSTEM AND METHOD, filed November 7, 2002, by R. W. Byren *et al.* (Atty. Docket No. PD 02W111) the teachings of which are incorporated by reference herein. In accordance with the present teachings, a lightweight and inexpensive relay mirror arrangement is located on the UAV 100 to redirect a high power electromagnetic (e.g. HEL) beam originating from the submarine 20.

As shown Figure 3, in an illustrative embodiment of the invention, the subsystem of the UAV 100 includes a master oscillator (MO) 502, an outcoupler relay mirror 504, and a target tracker 506 mounted on a remote platform 510. The master oscillator 502, outcoupler 504 and target track sensor 506. A conventional power supply 511 and cooling unit 513 are provided for the master oscillator 502 off platform. The UAV 100 further includes a first beam director 508. A platform track sensor 509 is located on the beam director 508. The relay mirror 504 is pointed in the direction of a target 550 by beam director 508 under the control of a conventional servo processor 515. The servo processor 515 receives inputs from the target track sensor 506 and the platform track sensor 509. The servo processor 515 also controls the pointing angle of the beam director 508 through a gimbaled arrangement not shown.

The beam director 508 serves: (1) to orient a local platform (not shown) such that the target track sensor's line-of-sight (LOS) is pointed precisely toward the target aimpoint and (2) to coarsely point the LOS of the master oscillator beam 501 toward the target 550. See Fig. 3. The target track sensor 506, master oscillator 502, and outcoupler 507 are configured and aligned such that the master oscillator beam 501, after reflecting off the outcoupler 504, is co-aligned with the target track sensor 506 line-of-sight (LOS). In this configuration, when the target track sensor LOS is pointed at the target aimpoint, an HEL beam 503 that is propagating opposite the direction of the master oscillator beam 501 will, upon reflection off the outcoupler 504, be directed to the target aimpoint.

In accordance with the present teachings, a second beam director 522 is located on the submarine 20. The second beam director 522 coarsely points the LOS of a phase conjugate amplifier beamline, consisting of a series of laser power amplifiers (amplifier beamline) 514 and a phase conjugate mirror 516, toward the UAV 100 under the control of a conventional servo processor 526 with input from a platform track sensor 524. The platform track sensor 524 may use passive optical means to track the up-leg aperture of the remote platform 510, or may use active optical tracking means with the aid of a small optical beacon (not shown) located on the remote platform 510. The phase conjugate mirror 516, ensures that the amplified HEL beam 503, after double-passing the up-leg atmospheric path, the optics within the two beam directors, and the amplifier beamline, will propagate opposite the direction of the master oscillator beam 501, thus satisfying the alignment condition described above.

Note that additional alignment beams 525 and 527 may be used to facilitate alignment between the first and second beam directors 508 and 522 and the second and first platform track sensors 524 and 509 respectively. A conventional power supply 528 and a cooling unit 530 are provided for the amplifier beamline 514.

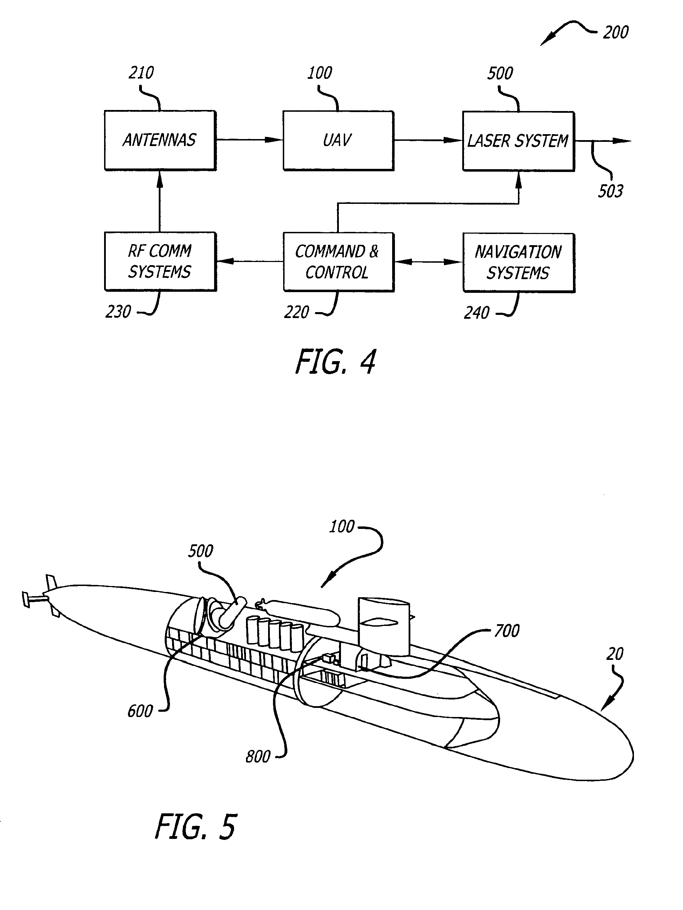

Fig. 4 is a block diagram of an illustrative implementation of an electrical system adapted for use with the system for projecting directed energy of the present invention. As illustrated in Fig. 4, the electrical system 200 includes antennas 210, which effect communication between a command and control system 220 and the UAV 100 via a radio frequency communication system 230. In the illustrative embodiment, the RF communication payload 230 includes an RF transmitter and associated antennas capable of talking to satellites, airborne sensors and the UAV 100. The command and control system 220 also communicates with onboard navigation systems 240. Hence, the command and control system directs the RF communications system 230, the navigation systems 240, and the laser system 500. In accordance with the present teachings, the UAV 100 redirects a laser beam 503 from the laser system 500.

Fig. 5 is a diagram showing a submarine modified with an HEL and a UAV in accordance with the present teachings. The high-energy laser system 500 is located in a compartment 600 such as that typically used for cruise missiles. The UAV 100 is located in an external compartment, which opens up during launch of the UAV. A battle management center 700 is collocated with a navigation center, adjacent to a high energy laser control center 800. The high energy laser control center 800 serves as a fire control command and control center for the high energy laser 500.

Pointing commands for the high energy laser on the submarine are provided by the battle management center 700 Guidance commands for the UAV 100 are provided by the battle management center 700. Pointing commands for the relay mirror (not shown) on the UAV are provided by target track sensor 506. The system 10 is controlled by software running on a processor on battle management center as discussed more fully below.

In operation in accordance with the present teachings, an air and spaceborne Intelligence, Surveillance and Reconnaissance (ISR) network 30 first provides data with respect to targets in a littoral region of interest 32. Next, the command, control and communications (C3) system 220 tasks the submarine 20 to approach the area 32 covertly via communication from one or more communication satellites 42, 44. When the nuclear submarine is within range (e.g. 20 km) from shore, it launches the UAV 100. As an alternative, the UAV 100 may be launched by a surface ship. The UAV 100 receives instruction from the network 30 as to where the specific area of interest might be. The UAV 100 then flies to the designated area 32 and, on arrival, activates an onboard terminal sensor to detect and designate moving targets of interest therein. After the moving targets are selected, the UAV 100 sends a command signal, via the network 30, for the nuclear submarine to initiate the onboard high energy laser weapon. A high energy laser beam is directed by onboard pointing and control system to reflecting mirrors of the UAV 100. The UAV 100 then directs the laser beam to targets 22 and 26.

Hence, the present invention is a network centric architecture and operational concept that leverages the capabilities of a laser weaponized nuclear submarine as a node in the network of ISR and communication assets and hovering unmanned beam director system to address the problem of fast moving lethal targets in the littoral region. These targets can be neutralized in a covert manner because the nuclear submarine can approach the area of interest using its underwater capabilities and it can launch a hard-to-detect hovering unmanned system which serves as a beam director for the high energy laser beam as well as the terminal target designator. One advantage of this invention is that it uses the network to detect and prosecute moving targets.

Thus, the present invention has been described herein with reference to a particular embodiment for a particular application. Those having ordinary skill in the art and access to the present teachings will recognize additional modifications applications and embodiments within the scope thereof.

It is therefore intended by the appended claims to cover any and all such applications, modifications and embodiments within the scope of the present invention.

## Claims

1. A system for projecting energy **characterized by**:
a platform (20);
an arrangement (507, 514) disposed on said platform for generating a laser beam;
an unmanned aerial vehicle (100); and
an arrangement (504) disposed on said vehicle (100) for relaying said laser beam.

2. The invention of Claim 1 wherein said arrangement for relaying is a relay mirror (504).

3. The invention of Claim 2 further including an arrangement (508, 515) disposed on said vehicle (100) for pointing said mirror (504).

4. The invention of Claim 3 further including a satellite based communication system for exchanging data with said vehicle (100) and said platform (20).

5. The invention of Claim 1 wherein said platform is earthbound.

6. The invention of Claim 1 wherein said platform is mobile.

7. The invention of Claim 6 wherein said platform is a surface ship.

8. The invention of Claim 6 wherein said platform is a submarine.

9. The invention of Claim 6 wherein said platform is airborne.
